Europäisches Patentamt

European Patent Office

Office européen des brevets

(19)

(11) Veröffentlichungsnummer: **0 166 822**
**B1**

(12) # EUROPÄISCHE PATENTSCHRIFT

(45) Veröffentlichungstag der Patentschrift:
29.11.89

(51) Int. Cl.⁴: **G 02 C 5/22**

(21) Anmeldenummer: **84116204.3**

(22) Anmeldetag: **22.12.84**

(54) **Federscharnier für Brillen.**

(30) Priorität: **30.06.84 DE 3424263**

(43) Veröffentlichungstag der Anmeldung:
**08.01.86 Patentblatt 86/2**

(45) Bekanntmachung des Hinweises auf die Patenterteilung:
**29.11.89 Patentblatt 89/48**

(84) Benannte Vertragsstaaten:
**AT CH DE FR IT LI**

(56) Entgegenhaltungen:
**EP-A- 0 091 573**
**EP-A- 0 096 928**
**DE-A- 2 242 044**
**FR-A- 2 466 788**
**FR-A- 2 535 070**

(73) Patentinhaber: **OBE-Werk Ohnmacht & Baumgärtner GmbH & Co. KG, Turnstrasse 20, D-7536 Ispringen (DE)**

(72) Erfinder: **Drlik, Günther, Adolf-Sautter-Strasse 8, D-7530 Pforzheim 8 (DE)**

(74) Vertreter: **Hubbuch, Helmut, Dipl.-Ing et al, Patentanwälte Dr. Rudolf Bauer Dipl.-Ing. Helmut Hubbuch Dipl.-Phys. Ulrich Twelmeier Westliche Karl-Friedrich-Strasse 29-31, D-7530 Pforzheim (DE)**

ACTORUM AG

**Beschreibung**

Die Erfindung bezieht sich auf ein Federscharnier für Brillen zum Überdrücken des Brillenbügels über die Anschlagstellung hinaus zur federnden Anlage am Kopf des Trägers.

Es ist eine solche Federscharnier-Ausbildung, z.B. nach der DE-PS 1 124 727 bekannt, bestehend aus gelenkig miteinander verbundenem Bügel- und Mittelteilscharnier, bei dem das Bügelscharnier mit Federkolbenteil gegen Federwirkung aus einer Kolbenaufnahme ausziehbar ist, wobei die auf die Kolbenstange aufgeschobene Schraubenfeder einerseits am Endkolben ansteht. Bei dieser Ausführung ist ebenso, wie bei der FR-PS 2 418 477 (7 806 553) der Zusammenbau des Federscharniers nur von beiden Seiten der Kolbenaufnahme her möglich, wobei der zweite Federanschlag durch eine Schulter derselben gebildet wird. Dies ist aufwendig und erfordert einen besonderen Aufbau der Kolbenaufnahme am Bügelende und ist damit platzaufwendig.

Auch Federscharnier-Ausbildungen, wie beispielsweise nach der DE-PS 1 235 623, welche mit einem senkrecht zur Bügellängsachse angeordneten Federbolzen arbeiten, sind sehr aufwendig und damit für die heute vielfach üblichen dünnen Metallbrillengestelle mit ebensolchen Brillenbügeln nicht zu verwenden.

Nach der FR-PS 2 535 070 (8 217 753) ist es ferner bekannt, bei solchen Federscharnieren, bei denen das Bügelscharnier mit Federkolbenteil gegen Federwirkung aus einer Kolbenaufnahme ausziehbar ist, und wobei die auf die Kolbenstange aufgeschobene Schraubenfeder einerseits am Endkolben ansteht, dass der anderseitige Federanschlag durch einen Anschlagkörper gebildet ist, durch welchen die Kolbenstange verschiebbar geführt ist und welcher mit der Kolbenaufnahme verbind- und wieder lösbar ist. Auch diese Ausführung ist sehr aufwendig und erfordert zahlreiche Einzelteile, welche zusammenzuschrauben sind und keine vormontierte Einbauweise erlauben. Die Verwendung von Kugelverriegelungen ist bei anders aufgebauten Federscharnieren z.B. nach der DE-OS 2 242 044 bekannt.

Es ist nun Aufgabe der Erfindung ein Federscharnier zu schaffen, welches vormontiert stirnseitig in einer sonst allseitig geschlossenen Aufnahme ein- und ausbaubar sowie wenig platzaufwendig ist und trotzdem eine einwandfreie Bügelführung ergibt, wie dies für Komfortbrillen unerlässlich ist.

Zur Lösung dieser Aufgabe kennzeichnet sich das Federscharnier nach dem Oberbegriff von Anspruch 1 dadurch, dass der Anschlagkörper eine Ausnehmung in Form einer Ringnut aufweist, mit welcher ein eingeführter Sperrkörper, beispielsweise eine Kugel, in Verbindung mit einem Durchbruch in Form einer schräg oder trichterförmig erweiterten Wandbohrung an der Kolbenaufnahme zur Verriegelung unter Federwirkung zusammenwirkt. Hiermit ergibt sich ein vormontiert und einfach in einer Seite in einer Kolbenaufnahme einschieb- und danach verriegelbare Federscharnier-Mechanik.

Nach einem weiteren Gedanken der Erfindung kann hierbei der Federdruck zur Bügelanlage am Kopf des Trägers in einfacher Weise dadurch eingestellt werden, dass das Scharnierauge vom Bügelscharnier der durchgreifenden Kolbenstange verschiebbar aufsitzt und letztere mittels Schraubkopf gegenüber dem aufgeschraubten Kolben zur Einstellung des Federdrucks zur Bügelanlage am Kopf des Trägers verdrehbar ist, wobei der Kolben drehgesichert in der Kolbenaufnahme geführt ist.

Zur Erzeugung eines Schnappeffekts beim Öffnen bzw. Schliessen der Brillenbügel kann überdies das Mittelteilscharnier an seinen beiden Scharnieraugen Nocken aufweisen, mit welchen diese gegen Endbacken der Kolbenaufnahme durch das unter Federwirkung stehende zwischen den beiden Mittelteilscharnieraugen liegenden mittlere Bügelscharnierauge gehalten sind. Schliesslich kann der Gelenkbolzen für die Scharnierverbindung im Bereich des mittleren Bügelscharniers abgesetzt sein, derart, dass dieser als Schnappbolzen unter Federwirkung – ohne Verschraubung – gehalten ist.

In der Zeichnung sind beispielsweise bevorzugte Ausführungsformen von Federscharnieren gemäss der Erfindung dargestellt und nachfolgend beschrieben und zwar zeigen:

Fig. 1 die perspektivische Darstellung der Einzelteile einer ersten Federscharnier-Ausbildung,

Fig. 2 den Mittelschnitt zur Federscharnier-Ausbildung nach Fig. 1,

Fig. 3 den Mittelschnitt durch eine zweite Federscharnier-Ausbildung,

Fig. 4 die Ansicht einer Federscharnier-Ausbildung mit Schnappeffekt und

Fig. 5 den Längsschnitt einer weiteren Federscharnier-Ausbildung mit Schnappbolzen.

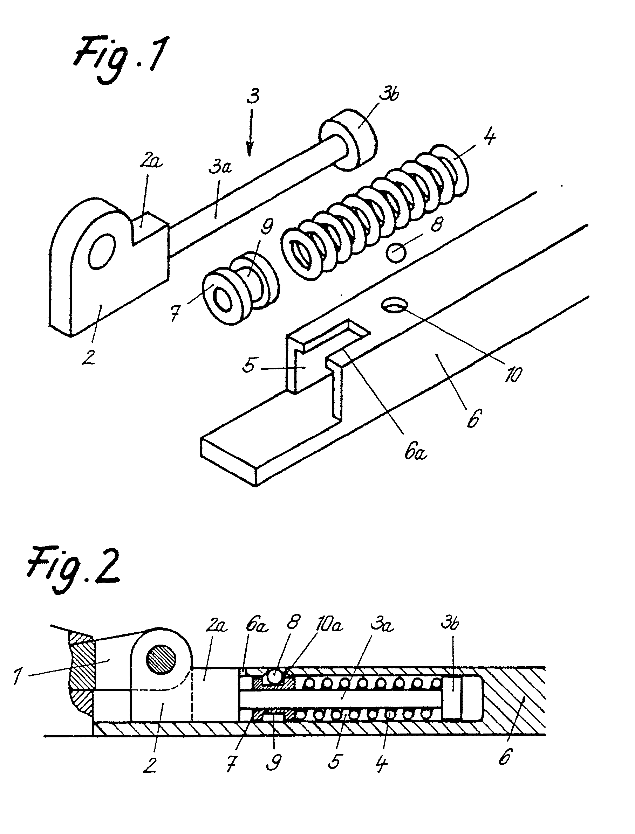

Wie aus der Zeichnung in Figur 1 und 2 ersichtlich wird, besteht das Federscharnier aus dem Mittelteil- und Bügelscharnier 1 und 2, letzteres mit Federkolbenteil 3, welcher nach dem Einbringen gegen Wirkung der Schraubenfeder 4 aus der Kolbenaufnahme 5 am Ende des Brillenbügels 6 ausziehbar ist. Hierbei steht die auf der Kolbenstange 3a aufgeschobene Schraubenfeder 4 einerseits am Endkolben 3b an, während andererseits der Federanschlag durch eine Anschlagkörper 7 gebildet wird, in welchem die Kolbenstange 3a geführt ist und welcher (7) hier beispielsweise mittels Kugel 8 als Sperrkörper nach dem Einführen in der Kolbenaufnahme 5 verriegel- und wieder lösbar ist.

Nach dem Einführen des Bügelteilscharniers 2 mit Federkolbenteil 3 und aufgeschobenem Anschlagkörper 7 sowie zwischengeschalteter Schraubenfeder 4 in der als Kolbenaufnahme 5 dienenden Sacklochbohrung am Bügelende 6 wird bei gegen Federwirkung eingedrücktem Anschlagkörper 7 an dessen Ringnut 9 über eine Wandbohrung 10 als Durchbruch an der Kolbenaufnahme 5 die Kugel 8 eingebracht und dient unter Wirkung der Feder 4, wie aus Figur 2 ersichtlich wird, als wieder lösbarer Sperrkörper. Hierfür ist die Wandbohrung 10 in der Kolbenaufnahme 5 nach unten bei 10a trichterförmig gestaltet.

Im übrigen ist das Bügelscharnier 2 am Federkolben 3 als flaches Scharnierauge ausgebildet, welches mit seinem Schulteransatz 2a in einer Endschlitzung 6a am Bügelende 6 gegen Verdrehung gesichert geführt ist. Hierbei kann die Kolbenstange 3a mit dem Scharnierauge 2 aus einem Stück gefertigt sein und der Endkolben 3b ist nach dem Einbringen der Schraubenfeder 4 mit Anschlagkörper 7 beispielsweise verschraubt bzw. versickt oder aber kann diese Verbindung bei einstückigem Federkolben 3 mit Endkolben 3b auch zwischen der Kolbenstange 3a und Scharnierauge 2 erfolgen. Im übrigen kann die Kolbenaufnahme 5, wie schon dargetan, einfach als Sackloch am Bügelende 6 angebracht sein, wobei letzteres gegebenenfalls durch Verformung verdickt ist. Hiermit eignet sich dieses von einer Seite montierbare Federscharnier für besonders schlanke Metall- aber auch Kunststoffbrillen-Ausführungen; hierbei kann bei letzterem die Bügeleinlage am Scharnierauge als Kolbenaufnahme ausgebildet sein.

Bei einer weiteren Ausführungsform nach Figur 3 entsprechen die Teile 1 bis 10 den vorgeschilderten, lediglich die Kolbenstange 3c ist im Endkolben 3d mittels Schraubkopf 3e von der offenen Scharnierseite her verschraubbar, um den Federdruck für die Bügelanlage am Kopf des Trägers einstellen zu können. Hierzu ist der Endkolben 3d in der Kolbenaufnahme 5 verdrehungssicher geführt, indem dieser (3d) z.B. viereckig in ebensolcher Aufnahme 5 läuft. Die Kolbenaufnahme 5 kann aber auch als runde Sacklochbohrung ausgeführt und im vorliegenden Falle eine Feder-Nutzführung für den Endkolben 3d vorgesehen sein. Die Verriegelung erfolgt hierbei entsprechend dem ersten Ausführungsbeispiel nach Fig. 1 und 2 nur dass hier beispielsweise eine gegen die Federwirkung schräge Wandbohrung 10b in der Kolbenaufnahme 5 für die Kugel 8 als Sperrkörper vorgesehen ist.

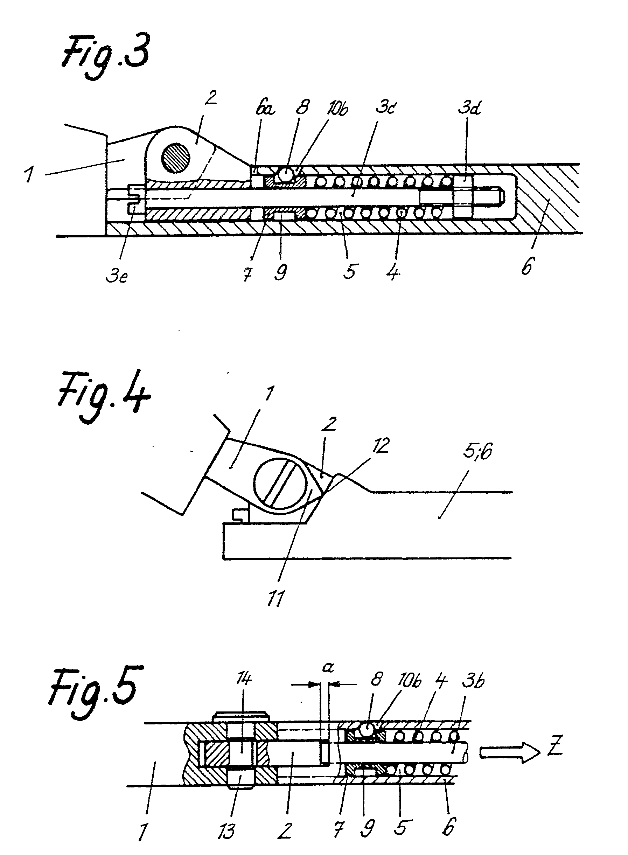

Ferner ist in Fig. 4 gezeigt, wie am Mittelteilscharnier 1 beide Scharnieraugen mit Nocken 11 ausgerüstet sein können, welche mit Federwirkung gegen Endbacken 12 der Kolbenaufnahme 5 für das Bügelteilscharnier 2 zur Erzeugung eines Schnappeffekts beim Öffnen und Schliessen der Brillenbügel 6 anstehen.

Schliesslich ist in Figur 5 noch die Verwendung eines Schnappbolzens 13 als Gelenkbolzen für das Brillenscharnier gezeigt, welcher beim Einsetzen im Mittelteilscharnier 1 im Bereich des mittleren Bügelscharniers 2 eine Absetzung 14 aufweist und damit, wie ersichtlich, ohne Verschraubung unter Federzug Z gehalten wird. Hierbei muss in allen Bügelstellungen eine Federzugweg «a» als Lagesicherung verbleiben.

Patentansprüche

1. Federscharnier für Brillen zum Überdrücken des Brillenbügels (6) über die Anschlagstellung hinaus zur federnden Anlage am Kopf des Trägers, bestehend aus gelenkig miteinander verbundenem Bügel- und Mittelteilscharnier (2, 1) bei dem das Bügelscharnier (2) mit Federkolbenteil (3) gegen Federwirkung aus einer Kolbenaufnahme (5) ausziehbar ist, wobei die auf die Kolbenstange (3a) aufgeschobene Schraubenfeder (4) einerseits am Endkolben (3b) ansteht und der andererseitige Federanschlag durch einen Anschlagkörper (7) gebildet ist, durch welchen die Kolbenstange (3a) verschiebbar geführt ist, und welcher mit der Kolbenaufnahme (5) verbind- und wieder lösbar ist, dadurch gekennzeichnet, dass der Anschlagkörper (7) eine Ausnehmung in Form einer Ringnut (9) aufweist, mit welcher ein eingeführter Sperrkörper (8), beispielsweise eine Kugel, in Verbindung mit einem Durchbruch (10) in Form einer schräg oder trichterförmig erweiterten Wandbohrung an der Kolbenaufnahme (5) zur Verriegelung unter Federwirkung zusammenwirkt.

2. Federscharnier nach Anspruch 1, dadurch gekennzeichnet, dass das Bügelscharnier (2) am Federkolben als flaches Scharnierauge ausgebildet ist, welches mit einem Schulteransatz (2a) in einer Endschlitzung (6a) an der Kolbenaufnahme (5) verdrehungssicher geführt ist.

3. Federscharnier nach einem der Ansprüche 1 oder 2, dadurch gekennzeichnet, dass eine Sackbohrung (5) am Bügelende als Kolbenaufnahme dient, welches Bügelende gegebenenfalls durch Verformung verdickt ist, und wobei der Anschlagkörper (7) zylindrisch ist.

4. Federscharnier nach einem der Ansprüche 1 bis 3, dadurch gekennzeichnet, dass das Scharnierauge (2) des Bügelscharniers der durchgreifenden Kolbenstange (3c, Fig. 3) verschiebbar aufsitzt und letztere mittels Schraubkopf (3e) gegenüber dem aufgeschraubten Kolben (3d) zur Einstellung des Federdrucks zur Bügelanlage am Kopf des Trägers verdrehbar ist, wobei der Kolben (3d) drehgesichert in der Kolbenaufnahme (5) geführt ist.

5. Federscharnier nach einem der vorhergehenden Ansprüche, dadurch gekennzeichnet, dass das Mittelteilscharnier (I) an seinen beiden Scharnieraugen Nocken (II) aufweist, mit welchen diese gegen Endbacken der Kolbenaufnahme (5) durch das unter Federwirkung stehende zwischen den beiden Mittelteilscharnieraugen liegende mittlere Bügelscharnierauge (2) zur Erzeugung eines Schnappeffekts beim Öffnen bzw. Schliessen des Brillenbügels (6) gehalten sind.

6. Federscharnier, nach einem der vorhergehenden Ansprüche, dadurch gekennzeichnet, dass der Gelenkbolzen (13, Fig. 5) für die Scharnierverbindung im Bereich des mittleren Bügelscharniers (2) abgesetzt ist, derart, dass dieser als Schnappbolzen unter Federwirkung – ohne Verschraubung – gehalten ist.

Claims

1. A spring hinge for eyeglasses, for forcing the bow (6) of the eyeglasses beyond the stop position for a resilient engagement with the head of the wearer, consisting of a bow-side hinge member and a rim-side hinge member (2, 1), which are articulatedly interconnected, wherein the bow-side hinge member (2) has a spring piston portion (3) and is adapted to be extracted against spring action from a piston receptacle (5), the coil spring (4) which has slidably been fitted on the piston rod (3a) bears at one end on the end piston (3b) and the spring abutment at the other end is constituted by a stop member (7), which is adapted to be connected to and to be disconnected from the piston receptacle (5), and the piston rod (30) extends through and is slidably mounted in the stop member, characterized in that the stop member has a recess, which constitutes an annular groove (9), and a locking member (8), such as a ball, in conjunction with an aperture (10) consisting of a wall bore which is provided in the piston receptacle (5) and flares in oblique or funnel shape cooperates with the recess under spring action for a locking action.

2. A spring hinge according to claim 1, characterized in that the bow-side hinge member (2) is formed on the spring piston as a flat hinge eye, which has a shoulder extension (2a), which is guided in an end slot (6a) of the piston receptacle (5) to be held against rotation.

3. A spring hinge according to claim 1 or 2, characterized in that a blind bore (5) at the end of the bow serves as a piston receptacle and that bow end is optionally enlarged in thickness because it has been deformed, and the stop member (7) is cylindrical.

4. A spring hinge according to any of claims 1 to 3, characterized in that the hinge eye (2) of the bow-side hinge member is slidably mounted on the piston rod (3c, Figure 3) which extends therethrough, the latter is guided by a screw head (3e) relative to the screwed-on piston (3d) for an adjustment of the spring pressure for urging the bow against the head of the wearer, and the piston (3d) is guided in the piston receptacle (5) so as to be held against rotation

5. A spring hinge according to any of the preceding claims, characterized in that the rim-side hinge member (1) is provided at its two hinge eyes with cams (11), which engage end jaws of the piston receptacle (5) and by the springloaded intermediate rim-side hinge eye (2) that is disposed between the two rim-side hinge eyes (2) are held to produce a snap action as the bow (6) of the eyeglasses is opened and closed.

6. A spring hinge according to any of the preceding claims, characterized in that the pivot pin (13, Figure 5) for the hinge is offset adjacent to the intermediate bowside hinge member (2) in such a manner that said pin is held as a snap-action pin under spring action – without a screw connection.

Revendications

1. Charnière à ressort pour lunettes, permettant de pousser la branche de lunettes (6) au-delà de la position de butée pour lui faire prendre appui de manière élastique contre la tête de l'utilisateur, constituée par un élément de charnière de branche (2) et un élément de charnière (1) de la partie centrale reliés de manière articulée entre eux et dont l'élément de charnière de branche (2) avec la partie annexe formant piston à ressort (3) peut, à l'encontre de l'action du ressort, être extraite d'un logement (5) pour le piston, le ressort à boudin (4) glissé en place sur la tige de piston (3a) prenant appui d'un côté contre le piston terminal (3b) et l'autre butée pour le ressort consistant en un organe formant butée (7) à travers lequel la tige de piston (3a) est guidée de façon à pouvoir coulisser et qui peut être assujetti au logement (5) pour le piston et à nouveau être dégagé de celui-ci, caractérisée en ce que l'organe formant butée (7) présente un évidement réalisé sous la forme d'une rainure annulaire (9) avec laquelle coopère, à des fins de verrouillage sous l'action du ressort, un organe d'arrêt introduit (8), par exemple une bille, en combinaison avec un passage (10) présenté sous la forme d'un trou élargi obliquement ou en forme de trémie dans la paroi du logement (5) pour le piston.

2. Charnière à ressort selon la revendication 1, caractérisée en ce que l'élément de charnière de branche (2) solidaire du piston à ressort est réalisé sous la forme d'un œillet de charnière plat, lequel est guidé avec une saillie en forme d'épaulement (2a), sans pouvoir tourner, dans une fente terminale (6a) dans la paroi du logement (5) pour le piston.

3. Charnière à ressort selon la revendication 1 ou 2, caractérisée en ce qu'un trou borgne (5) à l'extrémité de la branche sert de logement pour le piston, laquelle extrémité de branche est éventuellement épaissie par façonnage, l'organe formant butée (7) étant cylindrique.

4. Charnière à ressort selon l'une quelconque des revendications précédentes, caractérisée en ce que l'œillet (2) de l'élément de charnière de branche est monté de façon à pouvoir coulisser sur la tige de piston (3c) qui y pénètre et en ce que cette dernière peut, au moyen d'une tête de vis (3e) être tournée par rapport au piston (3d) vissé en place, afin de régler la pression du ressort pour faire appuyer la branche contre la tête de l'utilisateur, le piston (3d) étant guidé dans le logement (5) en étant empêché de tourner.

5. Charnière à ressort selon l'une quelconque des revendications précédentes, caractérisée en ce que l'élément de charnière (1) de la partie centrale présente au niveau de ses deux œillets des saillies (11) au moyen desquelles ces dernièrs sont maintenus au contact de joues terminales du logement (5) du piston par l'œillet médian (2) de l'élément de charnière de branche situé entre les deux œillets de l'élément de charnière de la partie centrale et soumis à l'action du ressort, afin de produire un effet de déclic lors de l'ouverture et/ou la fermeture de la branche de lunettes (6).

6. Charnière à ressort selon l'une quelconque des revendications précédentes, caractérisée en ce que l'axe d'articulation (13) pour la liaison de charnière est décalé, au niveau de l'œillet de branche médian (2), de telle manière que cet axe soit maintenu sous l'action du ressort, sans vissage, en tant qu'axe à déclic.

*Fig.1*

*Fig.2*

*Fig.3*

*Fig.4*

*Fig.5*